# EUROPÄISCHE PATENTANMELDUNG

(11) **EP 1 452 503 A1**
(43) Veröffentlichungstag der Anmeldung: **01.09.2004**
(21) Anmeldenummer: 04003785.5
(22) Anmeldetag: 19.02.2004
(51) Int. Cl.: C04B 28/02

(54) **Zementgebundene Fliessestriche**

(30) Priorität: 27.02.2003 DE 10308398
(71) Anmelder: Dyckerhoff Fertigbeton Saar GmbH & Co. KG, 66119 Saarbrücken (DE)
(72) Erfinder: Wagner, Volker, 66564 Ottweiler (DE)
(74) Vertreter: Wagner, Jutta, Dr.

(57) **Zusammenfassung**

Die vorliegende Erfindung betrifft einen zementgebundenen Fließestrich aus Zement, Zuschlagstoffen, Zusatzmitteln und Wasser, wobei die Mischung 200 bis 500 kg/m³ Gesteinsmehl einer maximalen Korngröße von 0,09 mm und einer durchschnittlichen Korngröße von 0,03 bis 0,05 mm enthält und als Zusatzmittel eine Mischung aus einem Fließmittel mit einer Dosierung von 0,5 bis 6 %, Aluminiumpulver mit einer Dosierung von 0,02 bis 0,25 % und einer Kunststoffdispersion mit einer Dosierung von 1 bis 3 %, jeweils bezogen auf das Zementgewicht, enthalten ist.

## Beschreibung

Die Erfindung betrifft eine neue Mischung zur Herstellung von zementgebundenen Fließestrichen, die aus Zement, Zuschlagsstoffen und Zusatzmitteln besteht und mit Wasser zu einer fließfähigen Estrichmasse verarbeitet wird.

Estriche bzw. Fließestriche werden gemäß DIN 18 560, 13 318 und 13 813 in großem Maße benutzt, um Fußböden oder Verkehrsflächen mit einer glatten, strapazierfähigen Oberflächenschicht zu versehen. Diese Oberflächenschicht kann weiterhin zur Abdeckung von auf dem Fußboden verlaufenden Rohren und Leitungen sowie von Fußbodenheizungselementen dienen. Die Estrichmasse wird dabei entweder als "krümelige Masse" aufgebracht und mit Rüttelvorrichtungen zu einer die Armaturen umschließenden Masse verdichtet und geglättet, wodurch eine erhebliche Menge von Luftporen in die Matrix eingeschlossen wird, oder mit so viel Wasser angeteigt, daß eine fließfähige und pumpfähige Masse entsteht, welche über die Bodenfläche verteilt wird und sich aufgrund der Schwerkraft bzw. durch leichte Bewegung selbstständig nivelliert und eventuell vorhandene Armaturen eng umschließt (Fließestrich).

Da zur Herstellung von fließfähigen Massen größere Mengen Anmachwasser erforderlich sind, entstehen durch das Verdunsten von Wasser entweder Poren, die die Festigkeit des Estrichs negativ beeinflussen, oder die Gesamtestrichmasse schrumpft (1-5 mm/m). Das Schwinden führt zu Rissen und somit zur Zerstörung der Estrichscheibe. Stärkeres Schwinden des Estrichs an der Oberfläche im Verhältnis zum Rest führt zum sogenannten Schüsseln, durch das sich die Estrichscheibe verformt. Diese Vorgänge können aufgrund verschiedener, meist überlagerter chemischer und Physikalischer Prozesse von wenigen Stunden nach dem Einbau bis zu mehreren Jahren dauern.

Zahlreiche Versuche, zementgebundene Estriche so zu modifizieren, daß diese Schrumpfung unterbleibt oder sich in beherrschbaren Grenzen hält, sind bisher gescheitert. Aus diesem Grund wird zur Herstellung von Fließestrich weiterhin auf die bewährte Verwendung von Gipsestrichen abgestellt, die durch die leichte Ausdehnung der Gipskristalle beim Aushärten dieser Schwindneigung entgegenwirken, so daß man zu einem nicht oder wenig schwindenden dichten Gefüge gelangt. Gipsestriche (auch als Calciumsulfatestriche oder Anhydridestriche bezeichnet) haben jedoch den Nachteil, daß Gips zu etwa 2 g pro Liter in Wasser löslich ist und somit Gipsestriche nur in trockenen Bereichen verwendet werden können oder durch aufwendige Maßnahmen eine Isolierung gegen Feuchtigkeit vorgenommen werden muß.

Aus der DE-PS 30 11 654 ist ein Verfahren zur Herstellung einer fließfähigen Mörtelmasse für Zementestriche beschrieben, bei dem Sand, Zement, Fließmittel, Steinmehl und Anmachwasser bis zur flüssigen, pumpfähigen Konsistenz gemischt und vergossen werden. Um eine Schrumpfung zu vermeiden, werden etwa 0,05 % Luftporenbildner beigegeben, die jedoch verhindern, daß sich ein ausreichend dichtes Gefüge bildet, welches für die Festigkeit der Masse erforderlich ist.

In der DD-PS 14 39 36 ist weiterhin ein Verfahren zur Herstellung von Fließestrichen beschrieben, wobei der Mischung von Zement, Sand, Wasser und Betonzusatzmitteln zusätzlich Filterasche (aus Rauchgasen) zugefügt wird. Wegen des hohen Wasseranspruchs dieser Filteraschen enthält die Masse trotz der Verwendung von Verflüssigern noch so viel Wasser, daß nach Abschluß der Hydrationsvorgänge Hohlräume in der Estrichmasse zurückbleiben, die das Gefüge so weit schwächen, daß sich Risse bilden können.

Aus der DD-PS 294 753 ist weiterhin ein Verfahren zur Herstellung von zementgebundenen Estrichen bekannt, bei dem Zement, Zuschlagstoffe und Wasser gemischt und zu einer fließfähigen Masse verarbeitet werden, wobei der Masse zusätzlich noch 3-12% Eisensiliziumstaub, der bei der Herstellung von Silizium oder Ferrosilizium als Abfallprodukt anfällt, zugefügt werden. Diese Stäube haben in Gegenwart von Zement hydraulische Eigenschaften und führen damit zu einer erhöhten Festigkeit des Gefüges. Zur Herstellung von Fließestrichen benötigt man ein Wasser-Zement-Verhältnis von 0,48 bis 0,51, so daß sich auch bei dieser Mischung bei der Verfestigung Hohlräume bilden bzw. die Gesamtmasse schwindet und zu Rißbildung führt.

Aus der DE 44 10 130 C1 ist ein rißfreier Zementfließestrich bekannt, welcher als Bindemittel eine Mischung aus 5 bis 25 Mass.-% Anhydrid (CaSO₄) und 10 bis 40 Mass.-% Zement und als Zuschlagstoff 60 Mass.-% Kalksteingries enthält, wobei die Mischung zusätzlich noch 1 bis 3 Mass.-% Zuschläge in Form von Kunststoffdispersionen, Verdickern, Entschäumern, etc. enthalten kann. Gemäß den Beispielen wird die Mischung mit einem Wasser-Zement-Verhältnis von ca. 0,2 versetzt, so daß diese nicht fließfähig sind. Durch den hohen Sulfatanteil wird die Ausbildung von Ettringit und damit Festigkeit und Formstabilität der Masse gefördert. Durch die Umwandlung des Anhydrids in Calciumsulfatmonohydrat (Gips) wird ein Großteil des enthaltenen Wassers chemisch gebunden, so daß diese Mischungen innerhalb von 2,5 Std. abbinden. Dieser Gipsgehalt macht die Produkte jedoch weich und für die Verwendung in feuchten Räumen ungeeignet.

Die DE 100 61 410 A1 beschreibt ein fließfähiges Mörtelsystem aus 10 bis 30 Gew.-% Portlandzement; 10 bis 30 Gew.-% Zusatzstoffen auf Basis von Gesteinsmehlen und/oder puzzolanischen und/oder latent hydraulischen Zusätzen; 50 bis 74 Gew.-% Zuschlagstoffen mit einer Sieblinie von 20 bis 40 % von 0,1 bis 0,5 mm, 20 bis 40 % von 0,5 bis 1,0 mm und 40 bis 60 % von 1,0 bis 8,0 mm; 0,1 bis 5 Gew.-% polymerem Fließmittel auf Basis von ungesättigten Mono- und/oder Dicarbonsäurederivaten und Oxyalkylenglycol-Alkenylethern und/oder -estern; 0,1 bis 5 Gew.-% Additive und 0 bis 10 Gew.-% Kunststoffdispersion und/oder redispergierbares Polymerisatpulver. Diese Systeme sollen auch ohne Zugabe von Schwundminderem zu volumenstabilen Mörtelsystemen mit geringem anfänglichen Quellen und nachfolgend geringem Schwund führen. Die gemessenen Werte sind jedoch noch nicht befriedigend.

Es besteht weiterhin ein erhebliches Interesse, feuchtigkeitsunempfindliche, zementgebundene Fließestriche zu entwickeln, die einen möglichst schwindfreien Belag ergeben.

Diese Aufgabe wird durch die Merkmale des Hauptanspruchs gelöst und durch die Merkmale der Unteransprüche weiter gefördert.

Überraschenderweise wurde gefunden, daß die Zumischung von feinstgemahlenem Kalksteinmehl oder anderen gegenüber dem Zement inerten Gesteinsmehlen in Verbindung mit einer erfindungsgemäßen Mischung aus Zusatzmitteln zu ansonsten üblichen zementgebundenen Fließestrichmischungen die mit zementgebundenen Fließestrichmischung bisher verbundenen Probleme löst. Erfindungsgemäß kommt es dabei darauf an, durch den Einsatz von Fließmittel den Wasserbedarf ausreichend niedrig einzustellen und durch den Einsatz von Gesteinsmehl als Zusatz und Aluminiumpulver als Zusatzmittel die gewünschte Volumenstabilität herzustellen.

So wird das üblicherweise bei Zementestrichen auftretende Schwinden beim Austrocknen von 1,2-1,5 mm/m auf Werte von < 0,6 mm/m gesenkt und insbesondere das Schüsseln wird auf ein in der Baustellenpraxis nicht mehr messbares Maß gesenkt.

Das erfindungsgemäße Kalksteinmehl, welches in Mengen von 100 bis 500 kg pro m³ Estrichmasse zugefügt wird, weist einen Siebdurchgangswert von ≤ 0,09 mm bei einem Korngrößenmaximum von 0,03 bis 0,05 mm auf, wobei Feinststäube mit unter 0,01 mm Siebdurchgang das Verfahren zwar nicht stören, jedoch sollte aufgrund ihrer Neigung zum Stauben ihr Anteil gering gehalten werden. Entsprechende Produkte werden durch Feinstmahlung von Kalkstein oder anderen geeigneten Gesteinen erhalten und durch geeignete Siebung oder Windsichtung die gewünschte Kornfraktion herausselektiert.

Ansonsten enthält das Estrichgemisch üblichen Normenzement von 2.500 bis 6.000 Blaine, insbesondere Portlandzement einer Mahlfeinheit von 3.000 bis 6.000 Blaine, beispielsweise ein Portlandzement PZ 45 gemäß DIN 1164 oder einen CEM I 32,5 bis 42,5 nach EN 197, in einer Menge von 200 bis 400, vorzugsweise 300 bis 350, insbesondere 320 kg pro m³.

Als Zuschlagstoffe wird z.B. ein Gemisch von Sand mit einem Sieblinienbereich von 0 bis 2 oder 0 bis 4 mm gemäß DIN 4226 und Splitt bzw. Kies mit einem Sieblinienbereich von 2 bis 8 mm bzw. 4/8 mm in einer Menge von 1.000 bis 2.000 kg, vorzugsweise 1.350 kg, pro m³ eingesetzt.

Um den Wasserbedarf der Mischung nach Möglichkeit herabzusetzen, enthält die Mischung noch 0,5 bis 6 %, vorzugsweise 1 bis 2 % eines Fließmittels oder Verflüssigers, wobei der %-Gehalt auf den Gehalt an Zement bezogen ist, vorzugsweise ein Naphthalin- oder Ligninsulfonat oder Polycarboxylatether oder ein anderes als "Superplastisizer" im Handel übliches Mittel. Vorzugsweise wird eine Kombination aus zwei oder mehreren Fließmitteln eingesetzt, welche bei weiterer Herabsetzung des Wasserbedarfs die Offenzeiten des Estrichs zusätzlich variieren lassen. Die Dosierung ist dann bevorzugt jeweils 0,25 bis 4 %, insbesondere 0,5 bis 2 %. Die Dosierung der beiden Fließmittel kann gleich oder verschieden sein. In einer besonders bevorzugten Ausführungsform werden 0,5 bis 1,5 % Melaminsulfonat und/oder Ligninsulfonat als erstes Fließmittel und 1 bis 3 % Polycarboxylatether als zweites Fließmittel eingesetzt.

Der Zusatz von 0,02 bis 0,25 % Aluminiumpulver, bezogen auf das Zementgewicht, ist erforderlich, um das Quell-/Schwindverhalten der Estrichmischung einzustellen. Aluminiumpulver, die über eine Wasserstoffbildung die Masse aufquellen, werden dabei insbesondere in Form einer Mischung zugefügt, welche etwa 1 % Aluminiumpulver enthält. Von der Mischung sind demnach 0,2 bis 2,5 % zuzufügen. Das Aluminiumpulver ist vorzugsweise ein für Gasbeton geeignetes Aluminiumpulver.

Aluminiumpulver als Zusatzmittel sind vor allem als Einpreßhilfe zum Verpressen von Spannstählen in Stahlbeton und ähnlichen Zwecken bekannt. Hierbei wirkt Aluminium aufgrund der Bildung von Gasblasen als Quellmittel.

Bei der vorliegenden Erfindung beruht die Wirkung des Aluminiumpulvers jedoch nicht auf dem Quelleffekt der Gasblasen. Die Volumenvergößerung des Bindemittels durch die mit dem Aluminiumpulver erzeugten Gasblasen kann für das verringerte Schwinden und Schüsseln nicht ursächlich sein, da die Gasentwicklung bereits direkt ab der Zumischung des Aluminiumpulvers im Transportbetonwerk stattfindet und zum Zeitpunkt des Einbaus, der üblicherweise bis zu drei Stunden nach der Anmischung liegt, weitgehend abgeschlossen ist. Das verbesserte Schwindverhalten scheint auf den beim Einbau bereits vorhandenen Gasblasen zu beruhen. Erstaunlicherweise sind die durch das Aluminium erzeugten Gasblasen im Gegensatz zu den durch hohe Wasser/Zementwerte entstehenden oder mittels Luftporenbildnern eingebrachten Poren weder der Wasserbeständigkeit noch der Festigkeit des Estrichs abträglich.

Weiterhin können übliche Einpreßhilfen/Quellmittel, wie Luftporenbildner, Quelltone, Zeolithe, Kieselgele, Cellulose und Cellulosederivate, enthalten sein.

Zur Regulierung des Wasserhaushaltes in der Estrichmischung nach dem Einbau wird vorzugsweise eine Kunststoffdispersion auf Styrolbutadienbasis oder auf Basis der üblicherweise verwendeten Melaminformaldehydharze mit einer Dosierung von 1 bis 3% zugegeben.

Ein Auffangen von zum Beginn der Hydratation des Zements in der Estrichmasse insbesondere an der Oberfläche auftretenden Spannungen kann durch Zumischung von zementfesten Kunststoff-, Glas- oder Mineralfasern in Mengen von bis zu 3 kg/m³ Estrich erfolgen.

Gips kann in der Mischung als Erstarrungsverzögerer in den für die Herstellung von Beton üblichen Mengen bis 5 %, vorzugsweise bis 3,5 % enthalten sein, größere Mengen, die zur Ausbildung von Gipsphasen führen, sollten jedoch nicht enthalten sein, da sie die Wasserbeständigkeit negativ beeinflussen.

Da die Produkte üblicherweise mit einem Fahrmischer auf die Baustelle transportiert werden, werden zunächst im Transportbetonwerk Zuschlagstoffe, Zement und Kalksteinmehl gemischt, mit Wasser versetzt und danach die übrigen Zusatzmittel zudosiert. Die vorstehenden Komponenten können auch trocken vorgemischt (Werktrockenmischung) und Baustellenseitig nur noch mit Wasser und gegebenenfalls Zusatzmitteln vermischt werden, bis sich eine fließfähige Masse bildet.

Es ist darauf zu achten, daß das ein Wasser-Zement-Verhältnis von ≤ 0,69, vorzugsweise < 0,60, eingehalten wird und die Gesamtmasse weniger als 250, vorzugsweise weniger als 200 I Gesamtwasser pro m³ enthält, die sich aus der Menge des zugegebenen Wassers und der Menge des in den gegebenenfalls feuchten Zuschlagstoffen enthaltenen Wassers bzw. den in Wasser gelösten Zusatzmitteln ergibt. Um eine pumpbare und sich selbst nivellierende Masse zu erreichen, sind selbst bei Verwendung von Fließmitteln Wasseranteile von über 150 I pro m³ erforderlich. Die benötigte Wassermenge ist an die jeweilige Zusammensetzung angepaßt. Zur einwandfreien Verarbeitungen sollte das Ziehmaß (nach Haegermann) der Estrichmischung im Bereich von 200 bis 250 mm liegen, wozu gegebenenfalls auf der Baustelle noch Zusatzmittel und/oder Wasser nachdosiert werden können.

Die Verarbeitung des Fließestrichs erfolgt mit entsprechenden bekannten Maschinen, wobei die Mischung vorzugsweise bereits mit der Förderpumpe (z.B. Schneckenpumpen oder Kolbenpumpen) entsprechend über die zu belegende Fläche verteilt wird. Danach ist gegebenenfalls durch entsprechende Rakel kurz nach dem Aufbringen einer größeren Menge eine gleichmäßige Verteilung zu bewirken. Weitgehend luftfreie, glatte Schichten lassen sich durch leichtes Nachrütteln mit einer Schwabbelstange oder ähnlichen Vorrichtung aufgrund der selbstnivellierenden Eigenschaften der Masse problemlos erzielen.

Die fertige Estrichfläche sollte für eine Dauer von bis zu 48 Stunden vor starker Austrocknung durch Zugluft, Erwärmung durch Sonneneinstrahlung oder Regen geschützt werden. Danach ist die Masse so weit durchgehärtet, daß sie in üblicher Weise weiter bearbeitet werden kann, wobei das Anschleifen nach 48 Stunden zu erfolgen hat.

### Beispiel 1

### Herstellung eines Zementfließestrichs

Pro m³ Estrichmasse werden
1.352 kg eines Gemisches aus Sand und Splitt mit einer Kornverteilung von 0 bis 8 mm bzw. eine äquivalente Menge von 1.433 kg feuchtem Gemisch mit
320 kg Portlandzement CEM I, 42,5 R
400 kg Kalksteinmehl (Korngröße < 0,09 mm) mit
200 Liter Gesamtwasser vermischt und
eine Mischung aus
3,2 kg Fließmittel (Addiment Fließmittel FM 6) (Melaminsulfonat/Naphthalinsulfonat)
7,5 kg Fließmittel (Addiment Fließmittel FM 37) (Polycarboxylatether)
1,5 kg Einpreßhilfe (Addiment Einpreßhilfe EH 1) (gecoatetes Aluminiumpulver/Füllstoffe/Verflüssiger)
1,5 kg Quellmittel (Addiment Q1) (Aluminiumpulver/Füllstoffe)
6,4 kg Kunststoff (Addiment Dispersion BD 10) (Styrol/Butadien-Dispersion 46%ig) und
750 g/m³ Kunststofffaser
zugefügt und die Gesamtmasse bis zur homogenen Verteilung der Komponenten vermischt. Das W/Z-Verhältnis der Mischung beträgt 0,60, der Wassergehalt W 200 kg, der Zementgehalt Z 320 kg und die Menge der Zuschlagstoffe G 1.352 kg.

### Beispiel 2

### Vergleich der Eigenschaften von verschiedenen Fließestrichen

Analog zu Beispiel 1 werden die Estriche A bis D aus folgenden Komponenten hergestellt: 340 kg CEM I 42,5 R als Zement, 1400 kg Quarzkies als Zuschlagstoff, 400 kg Kalksteinmehl, 6,5 kg Kunststoffdispersion BD10 und Fließmittel sowie Aluminiumpulver gemäß Tabelle 1. Fließmittel I ist Addiment FM37, Fließmittel II ist Addiment FM6, Aluminiumpulver wird in Form einer 1:1 Mischung aus Addiment Einpreßhilfe EH 1 und Quellmittel Addiment Q1 oder alternativ einer von der MC Bauchemie unter der Bezeichnung Fesa 01 erhältlichen Fertigmischung der vorgenannten Bestandteile eingesetzt.

**Tabelle 1:**

| | Estrich A | Estrich B | Estrich C | Estrich D (Vergleich) |
|---|---|---|---|---|
| Fließmittel I | 2,20 % | 2,20 % | - | 2,20 % |
| Fließmittel II | 1,00 % | - | 2,00 % | 1,00 % |
| Aluminium | 0,94% | 0,94% | 0,94% | - |

Für die Estriche wurde nach jeweils 1, 4 und 12 Wochen Schwund sowie Schüsseln entsprechend den im folgenden beschriebenen Verfahren bestimmt.

Die Schüsselrinne hat Abmessungen von 100 x 10 x 6 cm (LxBxH). Zu Beginn des Prüfverfahrens wird diese zunächst mit dünner Folie ausgelegt, um das Probestück nachher ausschalen zu können. Die Rundstahlbolzen, vermittels derer die Bewegungen des Prüfstückes an der der Messstelle gegenüber liegenden Stelle blockiert werden, sind zu befestigen. Die Rinne steht dann auf einem rutschfesten, erschütterungsfreien Untergrund unter normalen "Zimmerbedingungen" (ca. 20° C, 60% Luftfeuchtigkeit). Das Prüfmaterial wird eingefüllt und zur Verdichtung gerakelt. Sodann wird der Messpunkt fixiert, die Stahlplatte eingelegt und die Messuhr auf Null gestellt.

Die Quell-Schwindrinne hat Abmessungen von 100 x 9 x 4,5 cm (LxBxH). Bei der Prüfung des Materials mittels Quell-Schwindrinne wird zunächst die Prüfeinrichtung mit dünner Folie ausgelegt. Auf der dem Prüfstück zugewandten Seite wird am Messbolzen ein doppelter Randdämmstreifen eingelegt, wobei sicher zu stellen ist, dass hinter die Streifen kein Prüfmaterial geraten kann. An der der Messstelle gegenüberliegenden Seite befindet sich eine Endkralle, die so von Estrich umgeben sein muss, dass dieser sich nur an der Messeinrichtung bewegen kann. Auch hier ist auf eine Verdichtung des Prüfmaterials nach dem Einfüllen zu achten, die Messuhr zu befestigen und auf Null zu stellen.

Die folgenden Tabellen 2 und 3 geben die Ergebnisse der Messungen des Quell-Schwindmaß (Schwinden in mm/m und Schüssel mm/m) wieder:

**Tabelle 2:**

| Estrich | Schwinden | | |
|---|---|---|---|
| | 1 Woche | 4 Wochen | 12 Wochen |
| A | -0,12 | -0,13 | -0,13 |
| B | -0,51 | -0,61 | -0,72 |
| C | -0,39 | -0,52 | -0,61 |
| D | -0,68 | -0,98 | -1,30 |

**Tabelle 3:**

| Estrich | Schüsseln | | |
|---|---|---|---|
| | 1 Woche | 4 Wochen | 12 Wochen |
| A | 0,00 | +0,03 | +0,03 |
| B | +0,02 | +0,02 | +0,14 |
| C | +0,06 | +0,14 | +0,14 |
| D | +0,03 | +0,33 | +0,33 |

Man erkennt, dass nur mit den erfindungsgemäßen Mischungen A bis C befriedigende Werte für Schwind und Schüsseln erhalten werden. Bei den Estrichen B und C, bei denen jeweils nur ein Fließmittel enthalten war, musste aber ein höherer W/Z-Wert als bei Estrich A eingestellt werden, um noch eine ausreichende Verarbeitbarkeit zu erhalten.

## Patentansprüche

1. Zementgebundener Fließestrich umfassend Zement, Zuschlagstoffe, Zusatzmittel und Wasser, wobei die Mischung 200 bis 500 kg/m³ Gesteinsmehl einer maximalen Korngröße von 0,09 mm und einer durchschnittlichen Korngröße von 0,03 bis 0,05 mm enthält, **dadurch gekennzeichnet, daß** als Zusatzmittel eine Mischung aus einem Fließmittel mit einer Dosierung von 0,5 bis 6 %, einem Aluminiumpulver mit einer Dosierung von 0,02 bis 0,25 % und einer Kunststoffdispersion mit einer Dosierung von 1 bis 3 %, jeweils bezogen auf das Zementgewicht, enthalten ist.

2. Fließestrich gemäß Anspruch 1, **dadurch gekennzeichnet, daß** der Zementgehalt 300 bis 350 kg pro m³, der Gehalt an Zuschlagstoffen 1.000 bis 2.000 kg pro m³ und der Wassergehalt 150 bis 250 kg pro m³ beträgt.

3. Fließestrich gemäß Anspruch 1 oder 2, **dadurch gekennzeichnet, daß** Kalksteinmehl als Gesteinsmehl enthalten ist.

4. Fließestrich gemäß einem der Ansprüche 1 bis 3, **dadurch gekennzeichnet, daß** eine Mischung aus zwei Fließmitteln mit einer Dosierung von jeweils 0,25 bis 4 % enthalten ist.

5. Fließestrich gemäß einem der Ansprüche 1 bis 4, **dadurch gekennzeichnet, daß** das Aluminiumpulver als 1 %-ige Mischung mit einer Dosierung von 0,2 bis 2,5 % enthalten ist.
